# DEMANDE DE BREVET EUROPEEN

(11) **EP 1 795 766 A1**
(43) Date de publication de la demande: **13.06.2007**
(21) Numéro de dépôt: 06291897.4
(22) Date de dépôt: 08.12.2006
(51) Int. Cl.: F16B 7/04

(54) **Pièce de liaison d'éléments tubulaires pour réaliser une structure tubulaire modulable**

(30) Priorité: 08.12.2005 FR 0553800
(71) Demandeur: Trilogiq SA, 95310 Saint Ouen l'Aumone (FR)
(72) Inventeur: Courtin, Eric, 92200 Neuilly sur Seine (FR)
(74) Mandataire: Breese Derambure Majerowicz

(57) **Abrégé**

L'invention concerne un élément de liaison destiné à être fixé rigidement à au moins un autre élément de liaison similaire en vue de former une pièce de liaison (4) destinée à être associée avec des éléments tubulaires (5), lesdits éléments tubulaires comprenant un revêtement thermoplastique (10), pour la réalisation d'une structure tubulaire modulable, ledit élément de liaison comprenant au moins deux tronçons extrêmes (2, 3), au moins l'un des tronçons (2, 3) comprenant au moins une saillie (9), les dimensions de ladite saillie étant agencées pour mordre ponctuellement dans le revêtement thermoplastique (10) de l'élément tubulaire (5) lorsque la pièce de liaison (4) est associée avec ledit élément tubulaire de sorte à assurer ainsi un ancrage de l'élément tubulaire (5) avec l'élément de liaison.

## Description

L'invention concerne un élément de liaison destiné à être fixé rigidement à un ou plusieurs autres éléments de liaison similaire en vue de former une pièce de liaison destinée à être associée avec des éléments tubulaires pour la réalisation d'une structure tubulaire modulable.

L'invention concerne également une pièce de liaison formée par au moins deux tels éléments de liaison ainsi qu'une structure tubulaire modulable composée d'éléments tubulaires et de telles pièces de liaison.

On connaît déjà d'associer des éléments tubulaires avec des pièces de liaison, également appelés joints, en vue de réaliser des structures tubulaires modulables, notamment des structures pour le stockage et la présentation de pièces détachées destinées à être assemblées sur une chaîne de montage.

Classiquement, les tubes ont un revêtement externe thermoplastique et les joints sont des pièces métalliques et peuvent être fixés à deux tubes pour les associer l'un à l'autre. Les joints sont constitués d'au moins deux éléments généralement symétriques présentant des tronçons extrêmes ayant une forme générale de semi-cylindre. La partie extrême d'un tube est reçue dans un tronçon semi-cylindrique d'un élément et l'autre élément est placé en regard du premier afin d'emprisonner le tube. La fixation du tube avec le joint se fait au moyen d'un élément de fixation et de rainures présentes dans le demi-cylindre qui s'accrochent dans le revêtement thermoplastique du tube au cours du serrage du joint sur le tube. En réalisant la même opération avec un autre tube et l'autre partie extrême du joint, on associe deux tubes ensembles pour former une structure.

Ces structures sont avantageuses en ce qu'elles sont aisées à monter et démonter et en ce qu'elles sont modulables. Elles s'adaptent donc facilement aux contraintes d'agencement autour des chaînes de montage, notamment du point de vue de la forme et des dimensions de la structure.

Cependant, l'utilisation de rainures étendues pour l'accroche dans le revêtement thermoplastique ne permet pas une fixation efficace du tube par rapport à la pièce de liaison. En effet, les rainures exercent seulement un serrage autour du tube et ne pénètrent pas dans le revêtement thermoplastique du tube et celui-ci peut glisser ou tourner à l'intérieur de la pièce de liaison, ce qui peut rendre l'association des tubes et donc la structure tubulaire réalisée instables.

L'invention vise à pallier ces inconvénients en proposant un élément de liaison dans lequel l'ancrage dans le revêtement thermoplastique d'un élément tubulaire est réalisé au moyen de saillies ponctuelles et de petites dimensions par rapport à l'élément de liaison. De telles saillies agressives permettent un accrochage efficace dans le revêtement thermoplastique du tube et donc une fixation efficace de l'élément tubulaire par rapport à la pièce de liaison formée d'au moins deux éléments de liaison.

A cet effet et selon un premier aspect, l'invention concerne un élément de liaison destiné à être fixé rigidement à au moins un autre élément de liaison similaire en vue de former une pièce de liaison destinée à être associée avec des éléments tubulaires, lesdits éléments comprenant un revêtement thermoplastique, pour la réalisation d'une structure tubulaire modulable, ledit élément de liaison étant rigide et comprenant au moins deux tronçons extrêmes de réception d'une partie d'un élément tubulaire, l'élément comprenant, dans la partie médiane entre les deux tronçons, des moyens de réception de moyens de fixation des éléments de liaison, au moins l'un des tronçons comprenant au moins une saillie de forme sensiblement tronconique, conique ou cylindrique dont la base est solidaire dudit tronçon et s'étendant vers l'élément tubulaire lorsqu'une partie de celui-ci est reçue par ledit tronçon, les dimensions de ladite saillie étant agencées pour mordre ponctuellement dans le revêtement thermoplastique de l'élément tubulaire lorsque la pièce de liaison est associée avec ledit élément tubulaire de sorte à assurer ainsi un ancrage de l'élément tubulaire avec l'élément de liaison.

L'utilisation de saillies ponctuelles en lieu et place de rainures étendues permettent la pénétration d'une partie de l'élément de liaison dans le revêtement thermoplastique de l'élément tubulaire et ainsi de fixer celui-ci par rapport à la pièce de liaison.

Selon une réalisation, la saillie présente une hauteur sensiblement inférieure ou égale à 1 mm et sa base présente un diamètre sensiblement inférieur ou égal à 1 mm.

Selon un deuxième aspect, l'invention concerne une pièce de liaison destinée à être associée avec des éléments tubulaires en vue de former une structure tubulaire, la pièce de liaison comprenant au moins deux éléments de liaison tels que décrits ci-dessus, associés les uns aux autres de telle sorte à comprendre au moins deux tronçons extrêmes ayant une forme générale de cylindre de révolution permettant chacun la réception d'un élément tubulaire, ladite pièce de liaison comprenant dans sa partie médiane entre les tronçons extrêmes des moyens de réception de moyens de fixation des éléments de liaison constituant la pièce de liaison.

Selon un troisième aspect, l'invention concerne une structure tubulaire modulable composée d'éléments tubulaires et de pièces de liaison telles que décrites ci-dessus, une pièce de liaison associant au moins deux éléments tubulaires, l'un à un autre et les fixant de manière rigide l'un par rapport à l'autre.

D'autres objets et avantages de l'invention apparaîtront au cours de la description qui suit, faite en référence aux figures annexées.

La figure 1 est une représentation schématique en perspective de deux éléments de liaison selon un mode de réalisation de l'invention, lesdits éléments étant destinés à être fixés l'un à l'autre en vue de former une pièce de liaison.

La figure 2 est une représentation schématique en perspective d'un des éléments de liaison de la figure 1.

La figure 3 est une représentation schématique partielle en coupe d'une pièce de liaison enserrant un élément tubulaire selon un mode de réalisation de l'invention.

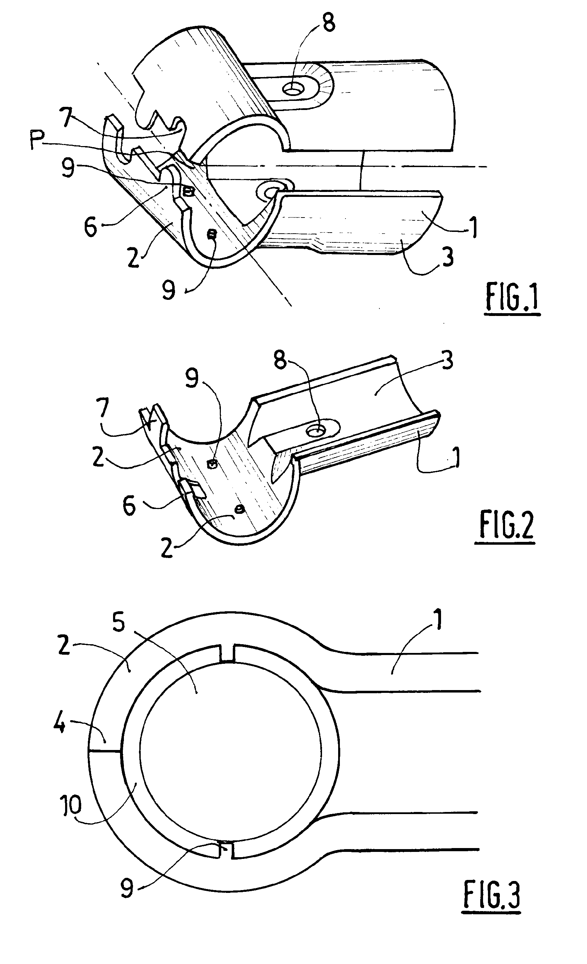

En référence aux figures, on décrit un élément de liaison 1 destiné à être fixé rigidement à au moins un autre élément de liaison 1 similaire en vue de former une pièce de liaison 4. La figure 1 montre deux éléments de liaison 1 tels qu'ils sont disposés avant leur fixation l'un à l'autre pour former la pièce de liaison 4.

La description suivante est faite en relation avec le mode de réalisation représenté sur les figures dans lequel l'élément de liaison 1 est destiné à être fixé avec un seul autre élément de liaison similaire. Cependant, selon d'autres modes de réalisation, l'élément de liaison 1 peut être destiné à être fixé à plusieurs autres éléments de liaison 1 afin de former une pièce de liaison 4, comme il sera décrit ultérieurement.

L'élément de liaison 1 est métallique et formé d'une seule pièce et comprend deux tronçons extrêmes 2 et 3 de réception d'une partie d'un élément tubulaire. Selon le mode de réalisation représenté, ces tronçons présentent une forme générale semi-cylindrique. Les tronçons 2 et 3 sont situés substantiellement d'un même coté d'un plan P formant plan de joint et ont leurs concavités tournées vers le dit plan de joint, comme représenté sur la figure 1. Le plan P est formé par le plan de coupe des semi-cylindres des tronçons 2 et 3. Selon la réalisation représentée sur les figures, les tronçons 2 et 3 s'étendent selon des directions sensiblement perpendiculaires. Cependant, les tronçons 2 et 3 peuvent également s'étendre selon des directions formant d'autres angles, 45° ou 180° par exemple afin de permettre l'association d'éléments tubulaires 5 selon différentes configurations. Le diamètre de chaque semi-cylindre correspond sensiblement au diamètre extérieure des éléments tubulaires 5 avec lesquels les éléments de liaison 1 sont destinés à être utilisés, de sorte que l'association de deux éléments 1 permet de former un cylindre serrant un élément tubulaire 5, comme représenté sur la figure 3. Selon la réalisation représentée sur les figures, l'un des tronçons 3 est destiné à recevoir la partie extrême d'un élément tubulaire et l'autre tronçon 2 est destiné à enserrer une partie d'un autre élément tubulaire, par exemple une partie centrale de celui-ci.

Dans le cas où l'élément de liaison est destiné à être associé à plusieurs autres éléments de liaison 1, les tronçons extrêmes 2 et 3 peuvent présenter une autre forme que semi-cylindrique. En effet, la forme des tronçons est adaptée pour que, une fois les éléments de liaison associés entre eux, la pièce de liaison 4 présente des tronçons permettant d'enserrer un ou plusieurs éléments tubulaires. De même, les tronçons 2 et 3 ne s'étendent pas forcément d'un même côté d'un plan de joint et diverses formes peuvent être envisagées en fonction des associations d'éléments tubulaires que l'on souhaite réaliser.

Selon la réalisation représentée sur les figures, le tronçon 2 destiné à enserrer une partie de l'élément tubulaire 5 comprend une protubérance 6 et une empreinte 7 s'étendant sensiblement à partir du plan de joint P. La protubérance 6 s'étend au-delà du plan P tandis que l'empreinte 7 s'étend vers l'intérieur du tronçon 2 de sorte que la protubérance 6 est destinée à s'engager dans l'empreinte 7 d'un autre élément de liaison 1 lorsque les deux éléments de liaison 1 sont fixés l'un à l'autre en vue de former la pièce de liaison 4, comme représenté sur la figure 1. A cet effet, la protubérance 6 et l'empreinte 7 présentent une forme sensiblement complémentaire, par exemple semi-cylindrique ou triangulaire. La protubérance 6 et l'empreinte 7 permettent un bon positionnement de deux éléments de liaison 1 entre eux et une meilleure fixation de ces éléments.

Dans la partie médiane, entre les tronçons de réception 2 et 3, il est prévu un moyen de réception 8 de moyens de fixation (non représentés). Ce moyen est, par exemple, un orifice apte à recevoir une vis et un écrou, les dimensions de l'orifice étant adaptées à celles de la vis.

Au moins l'un des tronçons 2 et/ou 3 comprend au moins une saillie 9 de forme sensiblement tronconique, conique ou cylindrique dont la base est solidaire du tronçon et s'étendant vers l'élément tubulaire lorsqu'une partie de celui-ci est reçue par ledit tronçon. Les dimensions de la saillies 9 sont agencées pour mordre ponctuellement dans le revêtement thermoplastique 10 de l'élément tubulaire 5 lorsque la pièce de liaison 4 est associée avec l'élément tubulaire 5 de sorte à assurer ainsi un ancrage de l'élément tubulaire 5 avec l'élément de liaison 1, comme représenté sur la figure 3. Lorsque l'on dit que les dimensions de la saillie 9 sont agencées pour mordre ponctuellement dans le revêtement thermoplastique 10, on entend que la saillie 9 est agressive et présente une hauteur légèrement inférieure à l'épaisseur de revêtement thermoplastique 10 prévu sur l'élément tubulaire 5 et que ces dimensions sont petites par rapport à l'élément de liaison 1. Ainsi la saillie 9 forme une pointe qui ne s'ancre que sur un point du revêtement et non pas le long de celui-ci. Un tel ancrage est plus efficace et permet d'empêcher le mouvement de l'élément tubulaire 5 par rapport à la pièce de liaison 4 lorsque les éléments de liaison 1 sont fixés l'un à l'autre et que les moyens de fixation sont serrés.

A cet effet, la saillie 9 présente par exemple une hauteur sensiblement inférieure ou égale à 1 mm et la base de cette saillie présente par exemple un diamètre sensiblement inférieur ou égal à 1 mm.

Selon la réalisation représentée sur les figures, l'élément de liaison 1 comprend une pluralité de saillies 9 réparties sur la longueur d'au moins un des tronçons 2 et/ou 3.

On décrit à présent une pièce de liaison 4 destinée à être associée avec des éléments tubulaires 5 en vue de former une structure tubulaire. Selon le mode de réalisation représenté sur les figures, la pièce de liaison 4 comprend deux éléments de liaison 1 analogues tels que décrits ci-dessus, disposés en regard l'un de l'autre, de part et d'autre d'un plan de joint P commun des deux éléments de liaison 1. Les concavités des éléments de liaison sont tournées l'une vers l'autre, de telle sorte que la pièce de liaison 4 comprend deux tronçons extrêmes ayant une forme générale de cylindre de révolution permettant chacun la réception d'un élément tubulaire 5. La pièce de liaison 4 comprend dans sa partie médiane entre les tronçons extrêmes des moyens de réception 8 de moyens de fixation des deux éléments de liaison 1 constituant la pièce de liaison 4.

Selon la réalisation représentée sur les figures, l'un des tronçons extrêmes est agencé pour recevoir la partie extrême d'un élément tubulaire 5 et l'autre tronçon extrême étant agencé pour enserrer une partie d'un autre élément tubulaire, par exemple une partie centrale de celui-ci. Le serrage des moyens de fixation permettent un ancrage supplémentaire des saillies 9 dans le revêtement thermoplastique 10 d'un élément tubulaire 5 afin d'assurer que l'élément tubulaire ne puisse pas se déplacer par rapport à la pièce de liaison 4 quand ces moyens de fixation ont été serrés.

Selon d'autres modes de réalisation, la pièce de liaison 4 résulte de l'association de plus de deux éléments de liaison 1. Ces éléments 1 ont alors des formes agencées pour permettre leur association et la réalisation des tronçons de réception des éléments tubulaires.

Une telle pièce de liaison 4 permet de réaliser une structure tubulaire modulable (non représentée) composée d'éléments tubulaires 5 et de pièces de liaison. Une pièce de liaison associe un élément tubulaire 5 à un autre et les fixe de manière rigide l'un par rapport à l'autre. Chaque élément tubulaire 5 comprend un revêtement thermoplastique permettant l'ancrage des saillies 9 de la pièce de liaison 4.

L'ancrage des saillies 9 permet de garantir une meilleure rigidité et une plus grande solidité de la structure tubulaire réalisée, l'association des éléments tubulaires entre eux étant plus rigide du faite de l'action des saillies dans le revêtement thermoplastique de ces éléments tubulaires.

Selon d'autres réalisations, une pièce de liaison 4 peut comprendre plus de deux tronçons extrêmes, par exemple trois tronçons extrêmes formant un trièdre, afin d'associer plus de deux éléments tubulaires entre eux.

## Revendications

1. Elément de liaison destiné à être fixé rigidement à au moins un autre élément de liaison similaire en vue de former une pièce de liaison (4) destinée à être associée avec des éléments tubulaires (5), lesdits éléments tubulaires comprenant un revêtement thermoplastique (10), pour la réalisation d'une structure tubulaire modulable, ledit élément de liaison étant rigide et comprenant au moins deux tronçons extrêmes (2, 3) de réception d'une partie d'un élément tubulaire, l'élément comprenant, dans la partie médiane entre les deux tronçons (2, 3), des moyens de réception (8) de moyens de fixation des éléments de liaison, ledit élément étant **caractérisé en ce que** au moins l'un des tronçons (2, 3) comprend au moins une saillie (9) de forme sensiblement tronconique, conique ou cylindrique dont la base est solidaire dudit tronçon et s'étendant vers l'élément tubulaire lorsqu'une partie de celui-ci est reçue par ledit tronçon, les dimensions de ladite saillie étant agencées pour mordre ponctuellement dans le revêtement thermoplastique (10) de l'élément tubulaire (5) lorsque la pièce de liaison (4) est associée avec ledit élément tubulaire de sorte à assurer ainsi un ancrage de l'élément tubulaire (5) avec l'élément de liaison.

2. Elément de liaison selon la revendication 1, **caractérisé en ce que** les deux tronçons extrêmes (2, 3) présentent une forme générale semi-cylindrique, les deux tronçons (2, 3) étant situés substantiellement d'un même coté d'un plan (P) formant plan de joint et ayant leurs concavités tournées vers le dit plan de joint.

3. Elément de liaison selon la revendication 1 ou 2, **caractérisé en ce que** la saillie (9) présente une hauteur sensiblement inférieure ou égale à 1 mm.

4. Elément de liaison selon l'une quelconque des revendications 1 à 3, **caractérisé en ce que** la base de la saillie (9) présente un diamètre sensiblement inférieur ou égal à 1 mm.

5. Elément de liaison selon la revendication 1 à 4, **caractérisé en ce qu'**il comprend une pluralité de saillies (9) réparties sur la longueur d'au moins un des tronçons (2, 3).

6. Elément de liaison selon l'une quelconque des revendications 1 à 5, **caractérisé en ce que** l'un des tronçons (2, 3) comprend une protubérance (6) et une empreinte (7) s'étendant sensiblement à partir du plan de joint, la protubérance (6) et l'empreinte (7) présentant une forme sensiblement complémentaire, ladite protubérance étant destinée à s'engager dans l'empreinte (7) d'un autre élément de liaison lorsque les deux éléments de liaison sont fixés l'un à l'autre en vue de former la pièce de liaison (4).

7. Elément de liaison selon l'une quelconque des revendications 1 à 6, **caractérisé en ce que** les deux tronçons extrêmes (2, 3) s'étendent selon des directions sensiblement perpendiculaires.

8. Elément de liaison selon l'une quelconque des revendications 1 à 7, **caractérisé en ce qu'**il est réalisé d'une seule pièce.

9. Elément de liaison selon l'une quelconque des revendications 1 à 8, **caractérisé en ce qu'**il est métallique.

10. Pièce de liaison destinée à être associée avec des éléments tubulaires (5) en vue de former une structure tubulaire, la pièce de liaison comprenant au moins deux éléments de liaison (1) selon l'une des revendications 1 à 9, associés les uns aux autres de telle sorte à comprendre deux tronçons extrêmes ayant une forme générale de cylindre de révolution permettant chacun la réception d'un élément tubulaire (5), ladite pièce de liaison comprenant dans sa partie médiane entre les tronçons extrêmes des moyens de réception (8) de moyens de fixation des deux éléments de liaison (1) constituant la pièce de liaison (4).

11. Pièce de liaison selon la revendication 10 lorsqu'elle dépend de la revendication 2, **caractérisée en ce que** les éléments de liaison (1) sont disposés en regard l'un de l'autre, de part et d'autre du plan de joint (P) commun des deux éléments de liaison (1), avec leurs concavités tournées l'une vers l'autre.

12. Pièce de liaison selon la revendication 9 ou 10, **caractérisée en ce que** l'un des tronçons extrêmes est agencé pour recevoir la partie extrême d'un élément tubulaire (5), l'autre tronçon extrême étant agencé pour enserrer une partie d'un autre élément tubulaire (5).

13. Pièce de liaison selon l'une quelconque des revendications 9 à 12, **caractérisé en ce que** les moyens de fixation des deux éléments de liaison sont composés d'une vis et d'un écrou et **en ce que** les moyens de réception (8) de ces moyens de fixation sont un orifice adapté au format de la vis.

14. Structure tubulaire modulable composée d'éléments tubulaires (5) et de pièces de liaison (4) selon l'une quelconque des revendications 9 à 13, une pièce de liaison (4) associant au moins deux éléments tubulaires (5), l'un à un autre et les fixant de manière rigide l'un par rapport à l'autre.

15. Structure tubulaire modulable selon la revendication 14, **caractérisée en ce que** les éléments tubulaires (5) qui la composent ont un revêtement externe thermoplastique (10).
